# EUROPÄISCHE PATENTSCHRIFT

(11) **EP 0 988 204 B1**
(45) Veröffentlichungstag und Bekanntmachung des Hinweises auf die Patenterteilung: **11.07.2001**
(21) Anmeldenummer: 98901301.6
(22) Anmeldetag: 12.02.1998
(51) Int. Cl.: B61B 7/00

(54) **SEILBAHN ZU EINEM AEROSTATISCHEN AUFTRIEBSKÖRPER**
AERIAL CABLEWAY LEADING TO AN AEROSTATIC AIRBORNE BODY
TELEPHERIQUE MENANT A UN ELEMENT DE SUSTENTATION AEROSTATIQUE

(30) Priorität: 11.06.1997 CH 140897
(43) Veröffentlichungstag der Anmeldung: 29.03.2000
(73) Patentinhaber: Prospective Concepts AG, 8702 Zollikon (CH)
(72) Erfinder: REINHARD, Andreas, CH-8702 Zollikon (CH)
(74) Vertreter: Salgo, Reinhold Caspar, Dr.
(86) Internationale Anmeldenummer: CH9800053
(87) Internationale Veröffentlichungsnummer: WO9834823

(56) Entgegenhaltungen:
- BE-A- 763 506

## Beschreibung

Vorliegende Erfindung betrifft eine Seilbahn zum Transport von Personen und Waren zwischen Erdboden und einem aerostatischen Auftriebskörper nach dem Oberbegriff des Patentanspruches 1.

Aehnliche Transportbahnen - allerdings nur zum Transport von Wa-ren - sind bekannt, beispielsweise aus SU 18 087 65 A1, in einem etwas erweiterten Sinne auch aus SU 58 60 22. Ferner sind Personen- und Warenseilbahnen an sich bekannt.

Bei den aus den genannten Druckschriften bekannten Seilbahnen besteht die Aufgabe im wesentlichen darin, schwere Güter, wie Baumstämme, Baumaterial und dergleichen in Gebieten - im wesentlichen horizontal - zu transportieren, in denen keine Baupisten, Geleise und derlei Bauwerke errichtet werden können oder sollen. Die gefundenen Lösungen mögen daher für die Aufgabenstellung genügen. Ferner übernimmt - immer noch in den bekannten Einrichtungen - der aerostatische Auftriebskörper die Aufgabe einer Stütze oder eines Tragmastes, hingegen nicht diejenige einer Seilbahnstation.

Ferner ist Seilbahnbau zwischen zwei ortsfesten Stationen zum Transport von Personen und Gütern eine hochentwickelte Sparte der Technik. Weiter sind aus der Technik der gefesselten Aerostaten zur Luftraum-Überwachung mit elektronischen Mitteln Strukturen und Vorrichtungen bekannt zum Verankern, Fieren und Einholen solcher Fesselballone, beispielsweise aus dem Firmenprospekt "71 M™ Aerostat" des Unternehmens TCOM, L.P., Columbia, MD, USA.

Bei der Schaffung einer Seilbahn zu einem aerostatischen Auftriebskörper treten jedoch Probleme auf, die nicht durch Übertragen von bekannten Lösungen aus dem Gebiete des terrestrischen Seilbahn-Baus auf Eigenheiten der Fesselballon-Technik gelöst werden können. Der Begriff "Fesselballon" steht hier und im Folgenden grundsätzlich für einen mittels einer Leine am Boden verankerten aerostatischen Auftriebskörper, der zudem auch Komponenten eines aerodynamischen Auftriebs aufweisen kann.

Die Aufgabe die sich hier stellt, besteht im Bau einer Seilbahn zwischen Boden und einem Fesselballon unter Berücksichtigung der begrenzten Tragfähigkeit von Aerostaten und aller hier spezifisch auftretenden Sicherheitsaspekte. Ferner ist in die Aufgabenstellung einbezogen, dass Personengruppen rasch transportiert werden können und diesen Personen ein sicherer Aufenthalt auf einer Fesselballon getragenen Plattform geboten werden kann.

Die Lösung der gestellten Aufgabe ist hinsichtlich ihrer wesentlichen Merkmale wiedergegeben in Patentanspruch 1, hinsichtlich weiterer vorteilhafter Ausbildungen in den Patentansprüchen 2 bis 26.

Anhand der beigefügten Zeichnung wird die Erfindung näher erläutert. Es zeigen
- Fig. 1: einen schematischen Ueberblick über ein erstes Ausführungsbeispiel,
- Fig. 2: eine Ansicht von schräg oben auf die Bodenstation,
- Fig. 3: eine Seitenansicht des in der Bodenstation verankerten Fesselballons,
- Fig. 4: die Draufsicht von Fig. 3,
- Fig. 5: eine Seitenansicht der Ballongondel,
- Fig. 6: eine Draufsicht auf die Ballongondel,
- Fig. 7: eine Ansicht von schräg oben auf den Fesselballon,
- Fig. 8a: eine Seitenansicht einer Kabine, teilweise ausgebrochen,
- Fig. 8b: eine Draufsicht auf eine Kabine,
- Fig. 8c: eine Frontalansicht einer Kabine,
- Fig. 9: die Perspektive einer Kabine mit ausgefahrenen Rettungsvorrichtungen,
- Fig. 10: ein Detail der Seilführung,
- Fig. 11: eine Perspektive eines weiteren Ausführungsbeispiels einer Gondel,
- Fig. 12: ein Detail der Aufhängevorrichtung.

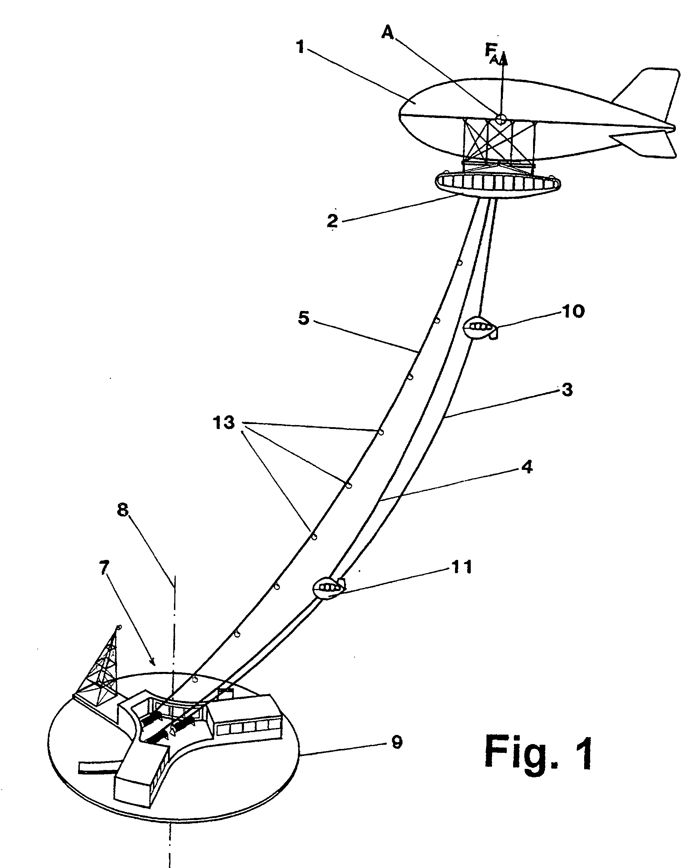

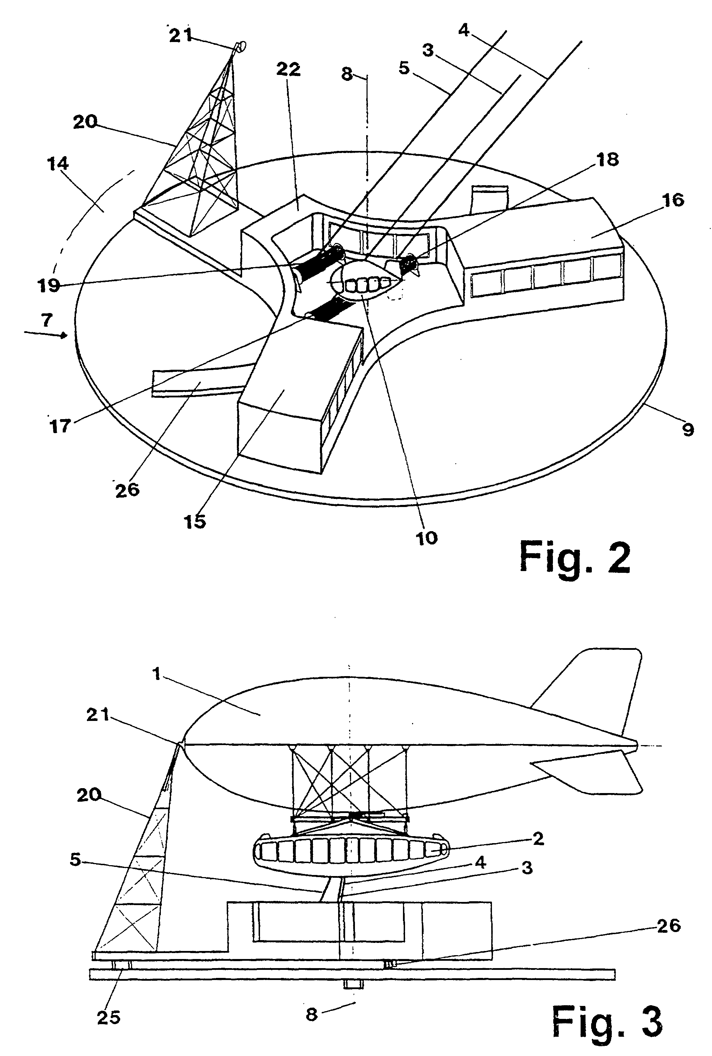

Fig. 1 ist die stark vereinfachte Darstellung einer erfindungsgemässen Seilbahn in einem ersten Ausführungsbeispiel. Ein Fesselballon 1 trägt eine Gondel 2 in welche drei Seile, zwei Transportseile 3, 4 und ein Fesselseil 5, münden. Die zwei Transportseile 3, 4 laufen in eine Bodenstation 7, welche um eine vertikale Achse 8 drehbar ist und auf einer kreisförmigen Schiene 9 umlaufen kann. Jedes der Transportseile 3, 4 trägt eine Kabine 10, 11 zur Personenbeförderung. Obwohl in weiteren Figuren auf die Einzelheiten Bezug genommen wird, kann anhand von Fig. 1 schon das Grundsätzliche erläutert werden: Die Transportseile 3, 4 sind sowohl in der Gondel 2 als auch in der Bodenstation auf und von Seiltrommeln laufend. Die Bodenstation 7, auf welche anhand von Fig. 2 näher eingegangen wird, kann der herrschenden Windrichtung beziehungsweise dem Standort des Fesselballons 1 aktiv nachgefahren werden, womit die Bodenstation 7 immer im Luv des Fesselballons 1 steht und die Seile 3, 4, 5 leewärts ablaufen.

Das Fesselseil 5 ist an der Gondel 2 an geeigneter Stelle befestigt und läuft in der Bodenstation 7 auf eine Seiltrommel 19. Damit kann der Fesselballon 1 auf jede gewünschte Höhe ausgefahren werden; die unbenutzte Länge der Transportseile 3, 4, bleibt auf Seiltrommeln 17, 18 der Bodenstation 7.

Im Grundsatz fahren die Kabinen 10, 11 gekoppelt im Pendelbetrieb, angetrieben von in der Gondel 2 vorgesehenen Fahrmotoren. Diese Koppelung kann jedoch aus Sicherheitsgründen gelöst werden, so dass die beiden Kabinen 10, 11 einzeln nach unten fahren können. In der Bodenstation 7 werden die Transportseile 3, 4 mit der gleichen Geschwindigkeit aufgerollt, wie sie in der Gondel 2 abgerollt werden und umgekehrt; die Antriebsmotoren der Seiltrommeln in der Bodenstation 7 dienen jedoch nur zum Bremsen der Transportseile 3, 4 beim Ausfahren und zur Kompensation der Seillänge beim Einfahren, die eigentlichen Fahrmotoren befinden sich jedoch, wie bereits gesagt, in der Gondel 2. Das Fesselseil 5 ist, wie die Transportseile 3, 4, vorzugsweise aus Aramidfasern oder Kunststoff-Fasern ähnlicher Qualität hergestellt. Es ist aufgebaut als sog. Nabelschnur, wobei die Seele des Fesselseils 5 Leitungen für den Energietransport und für die Informationsverbindung von Gondel 2 und Bodenstation 7 aufweist, umhüllt von einem Mantel aus den genannten Werkstoffen, der die Zugkräfte aufnimmt, und geeigneten elektrischen Leitern für den Blitzschutz.

Als vorteilhafte Ausführung weist der Fesselballon 1 photovoltaische Zellen 45 auf, sodass der Betrieb der Anlage, selbst bei Berücksichtigung von Nachtbetrieb, energieneutral gestaltet werden kann. Anstelle des in Fig. 1 dargestellten einzelnen konventionellen Fesselballons 1 sind Ausführungen mit zwei oder drei solchen Fesselballonen im Erfindungsgedanken mitenthalten; ferner auch solche mit anderen Ballonformen oder einer Vielzahl von Ballonen. Ebenso sind Auftriebskörper mit dynamischem Auftrieb zusätzlich zum aerostatischen im Erfindungsgedanken mitenthalten.

Ferner gehört zur Erfindung, das Fesselseil 5 mit Baken 13 auszurüsten, die mindestens nachts befeuert sind und passive Reflektoren oder Transponder für Radarsignale aufweisen, um der Flugsicherheit und der Sicherheit der Ballonseilbahn Rechnung zu tragen.

Fig. 2 ist die detailliertere Darstellung der Bodenstation 7. Die kreisförmige, einfach oder doppelt ausgeführte Schiene 9 ist beispielsweise umgeben von einer ringförmigen Strasse 14, die den Zugang zu zwei Warteräumen 15, 16 ermöglicht. Die Warteräume 15, 16 sind Einstiegs- und Ausstiegshallen für je eine der Kabinen 10, 11. Am Boden befindet sich hier die Kabine 10. Dargestellt sind ebenfalls die drei Seiltrommeln 17, 18, 19, je für eines der Seile 3, 4, 5; nicht dargestellt sind Motoren, Getriebe und weitere an sich bekannte Ausrüstungsteile sowohl für den Betrieb der Seiltrommeln 17, 18, 19, als auch für das Drehen der ganzen Bodenstation. Die Achse 8 läuft etwa durch die Mitte der Anordnung der drei Seiltrommeln 17, 18, 19. Am Luv-Ende der Bodenstation 7 befindet sich ein Turm 20 mit Aufnahmeeinrichtung 21 für den Fesselballon 1. Der Durchmesser der Schiene 9 entspricht etwa der Länge des Fesselballons 1, so dass dieser in verankerter Stellung nicht mehr Platz beansprucht als die ganze Anlage im Betriebszustand.

Die Anordnung der Seiltrommeln 17, 18, 19 gegen die Mitte der Bodenstation 7 und jene der Warteräume 15, 16 an der Peripherie ist nicht an sich erfindungswesentlich; die Seiltrommeln 17, 18 können auch peripher, die beiden Warteräume 15, 16 auch zentral angeordnet sein und allenfalls in einen einzigen zusammengefasst werden.

Die Bodenstation 7 enthält ferner Kommandoräume 22 für Technik und Administration.

Die aktive Nachführung der Bodenstation geschieht über eine Positionsbestimmung der Gondel 2 und Differenzbildung bezüglich der Position der Bodenstation 7. Die Positionsbestimmung kann entweder über eine Inertialplattform oder eine GPS-Ortung auf der Gondel 2 vorgenommen werden. Die Datenübermittlung geschieht durch die im Fesselseil 5 befindliche Datenleitung oder per Funk, ebenso wie die Synchronisierung der Seilgeschwindigkeiten in der Gondel 2 und der Bodenstation 7. Diese und weitere Rechenaufgaben werden durch einen in den Kommandoräumen 22 befindlichen Rechner (nicht dargestellt) ausgeführt, im Datenaustausch mit einem (ebenfalls nicht dargestellten) Rechner in der Gondel 2.

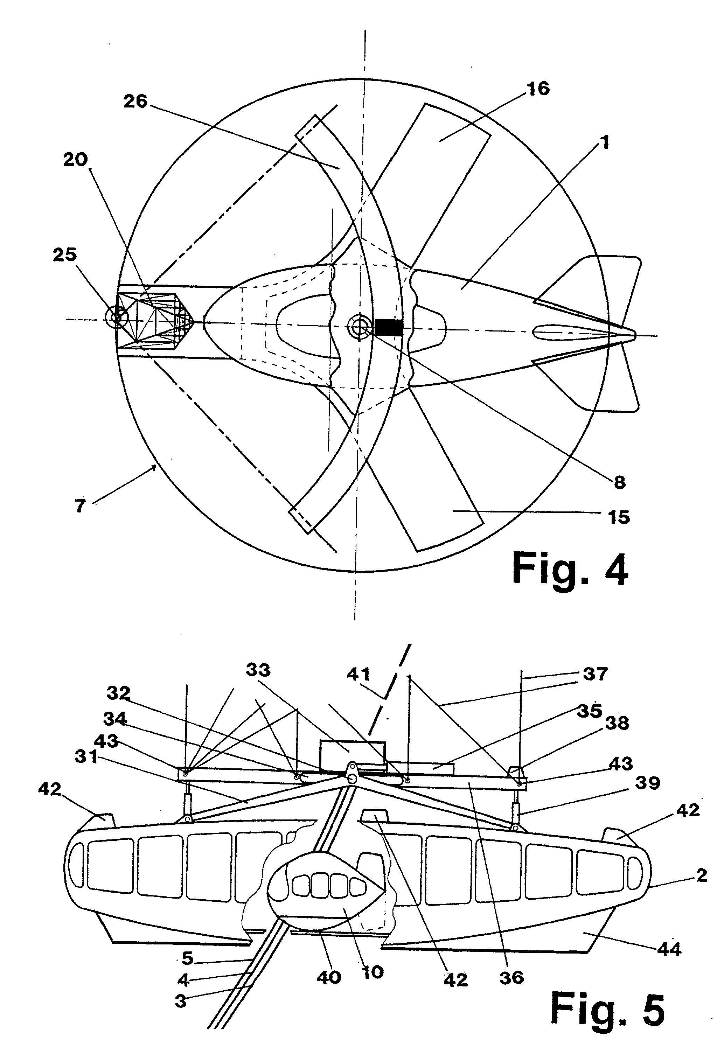

Fig. 3 zeigt den Fesselballon 1 mit Gondel 2 - wie sie in Fig. 5 beschrieben wird - am Turm 20 verankert. Die vom Auftrieb herrührenden Vertikalkräfte werden nach wie vor vom Fesselseil 15 übernommen. Horizontalkräfte aufgrund von Windeinwirkungen nimmt der Turm 20 auf, vorausgesetzt der Fesselballon 1 stehe genau im Wind. Da bei verankertem Fesselballon 1 seine Position im wesentlichen mit jener der Bodenstation 7 übereinstimmt, eignet sich die beschriebene Differenzbildung der Positionen hier nicht zur Nachführung der Bodenstation 7.

Dafür sind nun folgende Einrichtungselemente vorgesehen: Die ganze Bodenstation 7, die im Seilbahnbetrieb um die Achse 8 drehbar ist, wird nun um eine durch den Turm 20 laufende Achse 25 schwenkbar gemacht. Die ganzen technischen Einrichtungen der Bodenstation 7, wie Warteräume 15, 16, Seiltrommeln 17, 18, 19 und Kommandoräume 22 laufen auf einer weiteren Schiene 26, die ein Kreissegment bildet. Dessen Radius richtet sich nach den Gewichts- und Schwerpunktsverhältnissen der Bodenstation 7 und entspricht etwa dem Radius der kreisförmigen ersten Schiene 9. Fig. 4 zeigt hievon den Grundriss.

Ist der Fesselballon 1 verankert und erfährt nun seitlichen Wind, so schwenkt die gesamte Bodenstation 7 unter dem Einfluss der Windkräfte passiv um die Achse 25 auf der zweiten Schiene 26 aus. Diese Bewegung wird durch Sensoren im Bereich der Bodenstation 7 festgestellt und durch den in den Kommandoräumen 22 befindlichen Rechner verarbeitet, welcher die Motoren zur Drehung der gesamten Bodenstation 7 auf der ersten Schiene 9 so ansteuert, dass der Fesselballon 1 wieder lage- und kräftesymmetrisch in der Bodenstation 7 ankert. Die genannten Sensoren auf der Grundlage von Ultraschall, Infrarot oder Kraftmessung sind bekannt, und deren Einbau Stand der Technik; weder Sensoren noch Motoren sind daher dargestellt. Mit dem beschriebenen Vorgehen werden einerseits grosse seitliche Windkräfte verhindert, anderseits wird auch dafür gesorgt, dass die Bodenstation 7 nur gelegentlich, beim Ueberschreiten einer bestimmten Grenzlage des Fesselballons 1 nachgeführt werden muss.

Eine nicht bildlich dargestellte Ausführungsform der Bodenstation 7 ist als verankerter Schwimmkörper gestaltet. Ist dieser nun an einer Kette oder einem Tau am Grunde des Gewässers verankert, so entfallen alle Schwenk- und Nachführvorrichtungen. Sowohl der Fesselballon 1, als auch die Bodenstation 7 schwojen dann um den Ankerpunkt am Grunde des Gewässers. Selbstverständlich kann der genannte Schwimmkörper auch ein seegängiges Schiff sein und allenfalls aktiv der herrschenden Windrichtung nachgeführt werden.

Nicht besonders erwähnt sind allgemein aus der Seilbahntechnik bekannte Vorrichtungen und Vorkehren.

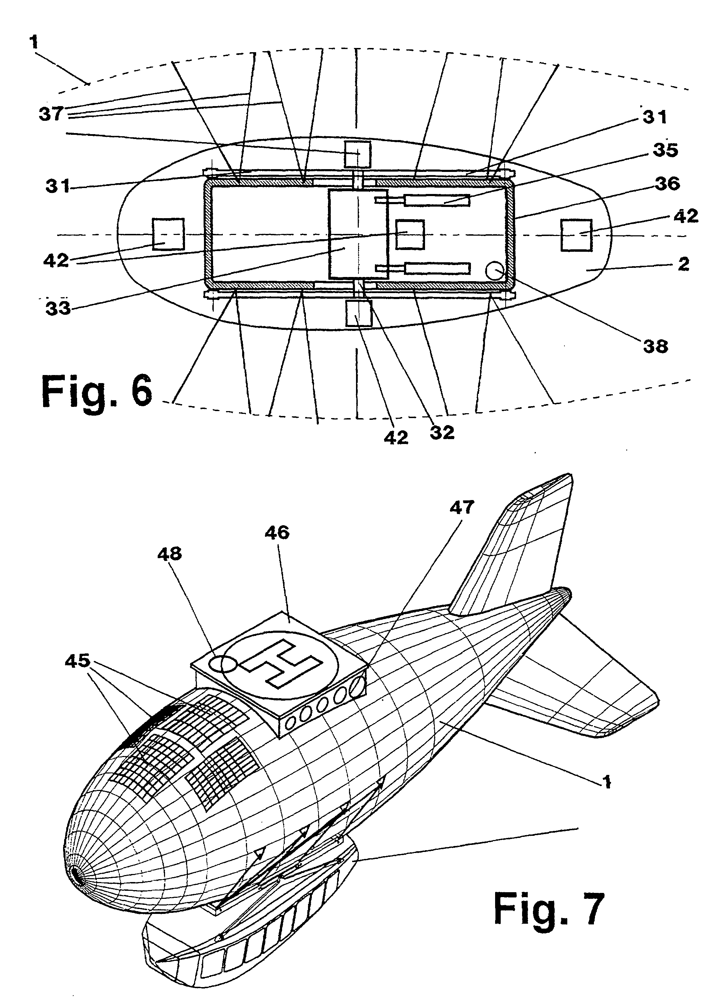

In Fig. 5 ist die Gondel 2 dargestellt. Mittels vier Aufhängeelementen 31 (nur zwei davon sichtbar) hängt sie an einer durchgehenden Achse 32. Alle Antriebsvorrichtungen und die Befestigung des Fesselseils 5 sind - vereinfachend dargestellt - in einem Kasten 33 enthalten, dergestalt, dass die von den Seilen 3, 4, 5 ausgehenden Zugkräfte momentenfrei von der Achse 32 aufgenommen werden. Diese, mitsamt dem Kasten 33, ist auf horizontalen Schienen 34 durch beispielsweise hydraulische Mittel verschiebbar; dargestellt ist hiefür ein Hydraulikzylinder 35. Die Schiene 34 und der Kasten 33 werden getragen von einem Rahmen 36, der mittels Trossen 37 am Fesselballon 1 befestigt ist, wie auch in Fig. 6 dargestellt. Die Verschiebungsmöglichkeit der Achse 32 gestattet, die Wirkungslinie (in Fig. 3 mit der Ziffer 41 versehen) der Seilkräfte durch den Auftriebsschwerpunkt des Fesselballons zu leiten, womit positive oder negative Aufrichtemomente auf den Fesselballon sofort und rechnergesteuert ausgeglichen werden können. Dazu ist der Rahmen 36 mit einem schematisch dargestellten Klinometer 38 ausgerüstet. Die am Rahmen 36 pendelnd aufgehängte Gondel 2 weist Dämpfer 39 auf, die entweder passiv als Schwingungsdämpfer oder aktiv als Hydraulikzylinder ausgebildet sind. Damit lassen sich Pendelschwingungen der Gondel 2 dämpfen oder die Gondel 2 aktiv horizontieren.

In ihrem mittleren Bereich weist die im Grundriss beispielsweise runde oder ovale Gondel 2 Oeffnungen auf für die Seile 3, 4, 5 und die Ein- und Ausfahrt der Kabinen 10, 11. Für den Ein- und Ausstieg von Passagieren kann die Oeffnung unter der eingefahrenen Kabine (in Fig. 3 ist es Kabine 10) durch einen Klapp- oder einschiebbaren Boden 40 verschlossen werden.

Eine Ansicht von oben auf den Rahmen 36 und die Gondel 2 ist in Fig. 6 dargestellt. Alle Elemente dieser Zeichnung sind bereits anhand von Fig. 5 eingeführt und erläutert.

Bei einer hier geschilderten erfindungsgemässen Anlage liegen Sicherheitsrisiken für Personen und Sachen vor. Sie lassen sich gliedern wie folgt:
a) Der Fesselballon 1 verliert Gas.
b) Der Fesselballon 1 zerreisst völlig aufgrund von Fremdeinwirkung.
c) Das Fesselseil 5 reisst
d) eines der Transportseile 3, 4 reisst
   - entweder über der Kabine 10 oder 11,
   - oder unter der Kabine 10 oder 11.

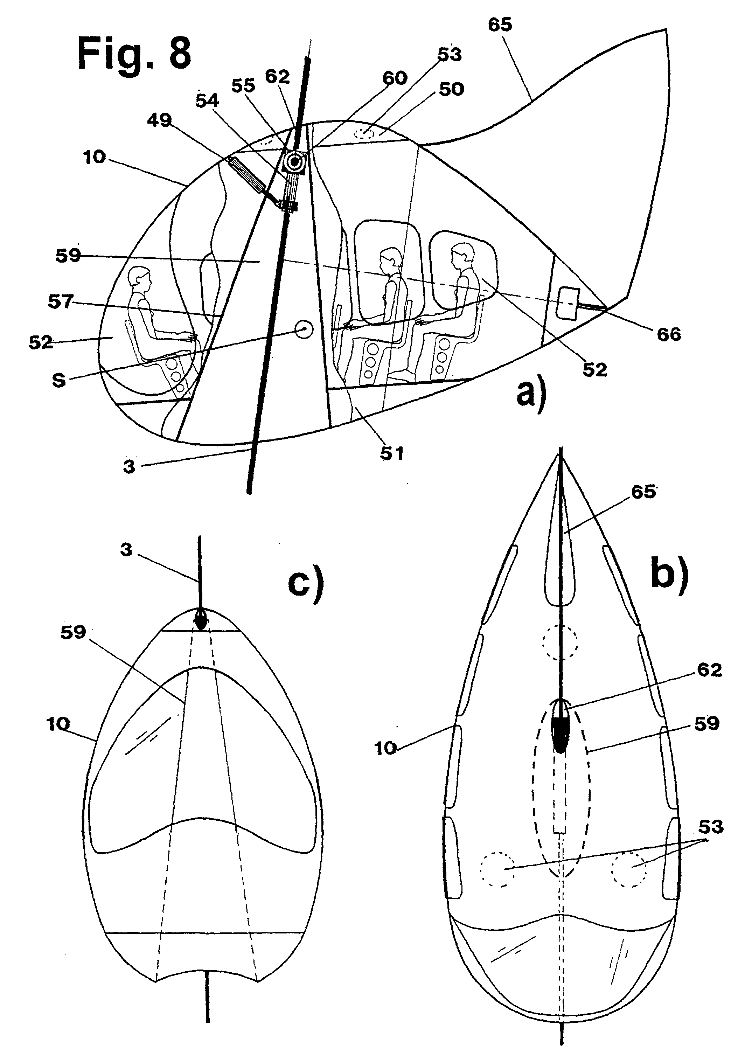

Diese Sicherheitsrisiken finden folgende konstruktive und erfindungsgemässe Lösungen:
a) Angesichts des grossen Gasvolumens in der Grössenordnung von 10'000 bis 40'000 m³ und eines Ueberdruckes im Bereich von 500 Pa bis 1'000 Pa ist der Auftriebsverlust pro Zeiteinheit selbst bei faustgrossen Löchern so klein, dass der Fesselballon bei Feststellung eines solchen Gasverlustes mit dem normalen Vorgehen eingeholt werden kann.
b) Der Fall des plötzlichen Gasverlustes ist unter Berücksichtigung der bestehenden Technologie solcher Fesselballone nur durch willentliche und zerstörerische Fremdeinwirkung denkbar. Trotzdem sind die Lösungen vorgesehen um auch in diesem Fall sichere Rückkehr zum Boden für die Gondel 2 zu gewährleisten: In Fig. 3 und 4 sind kastenförmige Elemente 42 auf die Gondel 2 aufgesetzt. Diese enthalten je einen Fallschirm mit Auslösevorrichtung. Im aktuell angenommenen Fall des weitgehenden Wegfalls der Auftriebskräfte, welche durch Kraftmesser in den mit der Ziffer 43 bezeichneten Aufhängepunkten des Rahmens 36 gemessen werden, werden durch den in der Gondel 2 befindlichen Rechner die Auslösungen der Fallschirme aktiviert. Abhängig von Grösse und Gewicht von Gondel 2, Kabinen 10, 11 und Seilen 3, 4, 5 sind vier bis acht Lastfallschirme der Standardgrösse von 100 Fuss (ca. 30 m) Durchmesser vorgesehen, die der Last eine maximale Sinkrate von etwa 7 bis 8 m/sec erteilen. Ergibt es sich, dass bei einem unter b) genannten Fall, eine der Kabinen 10, 11 in der Gondel 2 ist, so bleibt diese in der Gondel 2 und gleitet mit ihr zusammen an den genannten Fallschirmen zu Boden. Die Aufhängung, die Verbindung und das Auslösen solcher kombinierter Lastfallschirme ist Stand der Technik und braucht hier nicht weiter erläutert zu werden. Zum erfinderischen Sicherheitskonzept gehört weiter, dass die an Fallschirmen hängende Gondel 2 an den von der Bodenstation 7 her eingeholten Seilen nach unten schwebt, dabei im Lee der Bodenstation 7 bleibt, also gegen den Wind eingeholt wird, wodurch der Einholvorgang gut kontrolliert werden kann. An die Antriebe der Seiltrommeln 17, 18 stellt dies keine besonderen Anforderungen, da die Transportgeschwindigkeit der Kabinen 10, 11 im Normalbetrieb bei etwa 10 bis 15 m/sec betragen wird, gegenüber einer vorgesehenen genannten Sinkrate der Gondel 2 im Notfall von etwa 7 - 8 m/sec. Um den Aufprall am Boden abzufangen, weist die Gondel 2 eine beispielsweise als Air-Bag ausgelegte Knautschzone 44 auf, die in Fig. 3 schematisch angegeben ist. Als weitere im Erfindungsgedanken enthaltene Knautschzonen sind wabenartige Strukturen oder pneumatische Federbeine möglich.
c) Beim Reissen des Fesselseiles 5 ist die Gondel 2 immer noch an den zwei Transportseilen 3, 4 verankert, die so dimensioniert sind, dass sie allein die Zusatzspannung tragen. Da durch diesen Störfall jedoch sowohl die Energie- als auch die Datenverbindung per Draht oder Glasfaserkabel ausfallen, ist hiefür Vorkehr zu treffen:
   - Die Autonomie in energetischer Hinsicht wird anhand von Fig. 7 beschrieben.
   - Die Datenverbindung wird redundant über eine Funkverbindung sichergestellt.
      Da bei einem solchen Störfall ohne besonderen Zeitdruck gearbeitet werden kann, kann der Einholvorgang unterbrochen werden, wenn eine der Kabinen 10, 11 in der Bodenstation 7 eintrifft. Entweder kann diese vom entsprechenden Transportseil 3, 4 abgenommen, oder der ballonseitige Teil des Transportseils in der Gondel 2 eingeholt werden.
d) Reisst der ballonseitige Teil eines der Transportseile 3, 4, so wird diesem Störfall mit anhand von Fig. 8 beschriebenen Mitteln begegnet. Reisst jener Teil eines Transportseils 3, 4, der die entsprechende Kabine 10, 11 mit der Bodenstation 7 verbindet, so kann die Kabine 10, 11 entweder in die Gondel 2 eingezogen oder aber ganz zu Boden gelassen werden, je nachdem, welche Lösung die sicherere ist, abhängig von der Lage der betroffenen Kabine 10, 11 zwischen Boden und Fesselballon 1.

In Fig. 7 ist der Fesselballon 1 schräg von oben dargestellt und mit einigen, bisher nicht oder nicht im Einzelnen beschriebenen Elementen versehen. Zum einen trägt er eine Vielzahl von photovoltaischen Zellen 45, die flächenmässig so ausgelegt sind, dass der Energiebedarf des in der Luft befindlichen Teils der Anlage mindestens tagsüber gedeckt werden kann. Geht man in einer Musterrechnung davon aus,
- dass einerseits die Kabinen 10, 11 im Pendelbetrieb in mechanischer Kopplung und gleicher Ladung arbeiten, so ist hier lediglich der Reibungsverlust auszugleichen, der etwa 10% beträgt,
- dass bei einer Kabinenmasse von 800 kg und einer vertikalen Steiggeschwindigkeit von 15 m/sec eine Leistung von 120 kW nötig ist, um eine Kabine (ohne Pendelbetrieb) zu heben,
- dass daher der Reibungsverlust etwa 12 kW benötigt,
- dass für Beleuchtung, Hilfsaggregate und Steuerungen weitere ca. 10 - 15 kW benötigt werden,
so ist eine Gesamtleistung von ca. 30 kW angemessen. Legt man den photovoltaischen Zellen 45 einen Wirkungsgrad von 10% (in Bezug auf die Solarkonstante) zugrunde, so sind ca. 300 m² Solarzellen 45 nötig. Verglichen mit den etwa 3'500 m² Oberfläche eines Fesselballons 1 ist dies lediglich ein kleiner Teil der gesamten Oberfläche, der zur Steigerung der Versorgungs-Sicherheit auch ohne weiteres vergrössert werden kann. Weiter kann der Fesselballon 1 mittels eines beispielsweise pneumatischen Polsters 47 eine Heli-Landeplattform 46 tragen, die über eine Luke 48 erschlossen ist. Weist der Fesselballon 1 einen Ueberdruck von beispielsweise etwa 750 Pa auf, so erträgt er ohne einzubeulen eine Last von 750 N/m², so dass eine Landeplattform von etwa 150 m² eine Bruttotragkraft von etwa 112 kN aufweist. Selbstverständlich ist das Landegewicht eines Helikopters begrenzt nicht nur durch die aerostatische Tragkraft der Ballonhülle, sondern mindestens im gleichen Ausmasse durch den Netto-Auftrieb des Fesselballons 1. Ferner ändert das Aufsetzen eines Helikopters die relative Lage von Schwerpunkt und Auftriebszentrum; beeinträchtigt also das Aufrichtemoment von Fesselballon 1 und Gondel 2. Dies beschränkt das maximale Gewicht eines Helikopters ebenfalls. Fig. 8 zeigt ein Ausführungsbeispiel der Kabine 10; Fig. 8a in Seitenansicht, teilweise ausgebrochen, Fig. 8b in der Draufsicht, teilweise ausgebrochen, Fig. 8c in Frontalansicht.

Die Kabine 10 weist ein aerodynamisches Profil auf, sowohl um den Windwiderstand klein zu halten, als auch um die Kabine 10 immer in den Wind zu richten. Zum herrschenden Wind ist auch der Fahrtwind dazuzurechnen. Damit weist der Windvektor immer eine beträchtlich Vertikalkomponente auf. Zur besseren Stabilisierung hinsichtlich des Gesamtwindes trägt die Kabine 10 eine Stabilisierungsflosse 65, welche um eine annähernd horizontale Achse 66 geschwenkt werden kann: Bei der Auffahrt der Kabine 10 ist die Stabilisierungsflosse 65 nach unten geschwenkt, bei der Abfahrt nach oben, wie in Fig. 8a dargestellt.

Im Inneren birgt die Kabine 10 einen kegelförmigen Schacht 59, dessen Oeffnungswinkel alle praktisch vorkommenden Neigungen des Transportseils 3 umfasst. Die Wandung 57 dieses Schachts 59 ist beispielsweise die Tragkonstruktion für die Kabine 10, an welcher alle weitere Bauteile unmittelbar oder mittelbar befestigt sind. Das Transportseil durchläuft den Schacht 59 und ist in einer Muffe 54 festgeklemmt. Diese ist - beispielsweise - an ihrem oberen Ende mit einer kardanischen Aufhängung 55 verbunden, die von einer Achse 60 getragen wird. Die kardanische Aufhängung 55 erlaubt Pendelbewegungen der Kabine 10 in jeder vertikalen Ebene.

Solche Pendelbewegungen werden bedämpft durch einen schematisch eingezeichneten Dämpfer 49. Ein zweiter, zum Dämpfer 49 und zur Zeichenebene senkrechtstehender Dämpfer ist ebenfalls vorgesehen, der Klarheit der Zeichnung wegen jedoch nicht dargestellt.

Die Achse 60 liegt in der vertikalen Wirkungslinie des mit S bezeichneten Schwerpunktes der Kabine 10. Nach aussen hin ist die Kabine 10 verglast mit Scheiben 52. Ueber der verglasten Partie trägt die Kabine 10 eine Haube 50, die den Schacht 59 übergreift und eine Oeffnung 62 aufweist für das Transportseil 3. Die Haube 50 überdeckt ferner mehrere (hier drei) Behälter 53 mit Fallschirmen, an denen die Kabine 10 nach unten gleiten kann, falls das Transportseil 3 oberhalb der Kabine 10 reisst. Ein solcher Seilriss wird beispielsweise ermittelt durch Kraftmesser in der Achse 60. Alternativ können die Behälter 53 auch unterhalb des Passagierraumes angebracht sein.

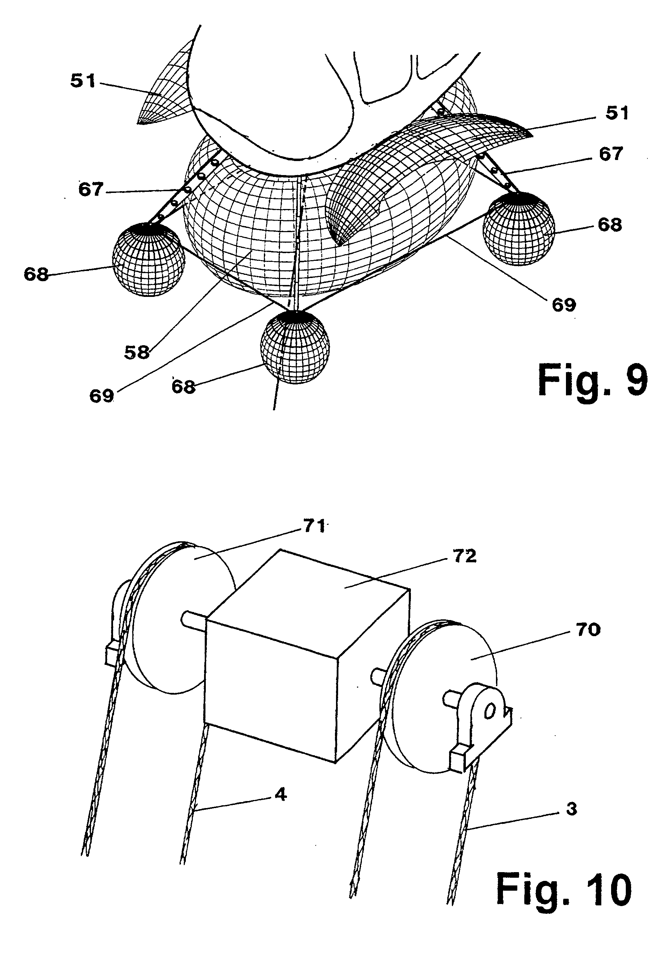

Unterhalb der verglasten Partie 52 trägt die Kabine eine Bodenhaube 51, in welcher eine Knautschzone 58 in Form beispielsweise einer Air-Bag befestigt ist. Ferner können - gleichzeitig ausgelöste, wie die Fallschirme in den Behältern 53 - auch beispielsweise vier Beine 67 ausgeklappt werden, welche je einen air-bag-ähnlichen pneumatischen Dämpfungskörper 68 aufweisen und beispielsweise durch ein Seil 69 mit einander verbunden sind, wie in Fig. 9 gezeigt. Weiter können zum Sicherheitskonzept und auch zur Gewichtsersparnis pneumatische Sitzgelegenheiten vorgesehen werden, die einen allfälligen Notabstieg an Fallschirmen weiter dämpfen.

Nicht gezeichnet sind Selbstverständlichkeiten, wie beispielsweise Telekommunikationseinrichtungen, Rechner, Nothilfematerial, Energiespeicher und dergleichen.

Durch die gewählte Form der Kabine wird - ausser in völlig windstillen Lagen - bewirkt, dass die Kabine 10 sich in den Wind stellt und nicht um das Transportseil zu rotieren beginnt. Selbstverständlich wird jede Verdrehung der Transportseile 3, 4 vor Inbetriebnahme sorgfältig eliminiert.

Allfälliger Schieflage der Kabine 10 durch gewichtsmässig asymmetrische Besetzung kann zumindest in der Sagittalebene dadurch begegnet werden, dass entweder die Achse 60 der kardanischen Aufhängung 55 verschieblich angeordnet ist oder ein elektrischer Energiespeicher, der zum Betrieb der Bordanlagen und Sicherheitsausrüstung ohnehin vorgesehen ist, in der Sagittalebene verschoben werden kann. Möglich ist selbstverständlich Kumulierung beider Vorkehren für eine optimale Trimmvorrichtung.

Eine weitere erfindungsgemässe Ausführungsform des Erfindungsgedankens, die nur teilweise durch Zeichnungen ergänzt ist, da der Schwerpunkt der Erfindung bereits dokumentiert ist, besteht darin, dass die Transportseile 3, 4 in der Gondel 2 um je eine Rolle 70, 71 umlaufen, wie in Fig. 10 dargestellt ist. Die beiden Rollen 70, 71 laufen in der Regel gekoppelt in gegenläufigem Drehsinn, wobei diese Koppelung beispielsweise mechanisch, hydraulisch oder elektrisch vorgenommen werden kann. Die Mittel zur Koppelung sind in Fig. 10 schematisch als Kasten 72 dargestellt und an sich bekannt.

Jedes Transportseil 3, 4 läuft bei diesem Ausführungsbeispiel von der Bodenstation 7 zur entsprechenden Rolle 70, 71 und wieder zur Bodenstation 7 zurück und wird durch einen in der Bodenstation 7 vorhandenen Fahrmotor angetrieben; die beiden Fahrmotoren sind wiederum koppelbar. Die Mittel zur Koppelung der Seilbewegung sowohl in der Gondel 2 als auch in der Bodenstation 7 gestatten auch die Koppelung zu lösen, so dass beide Kabinen 10, 11 getrennt abfahren können.

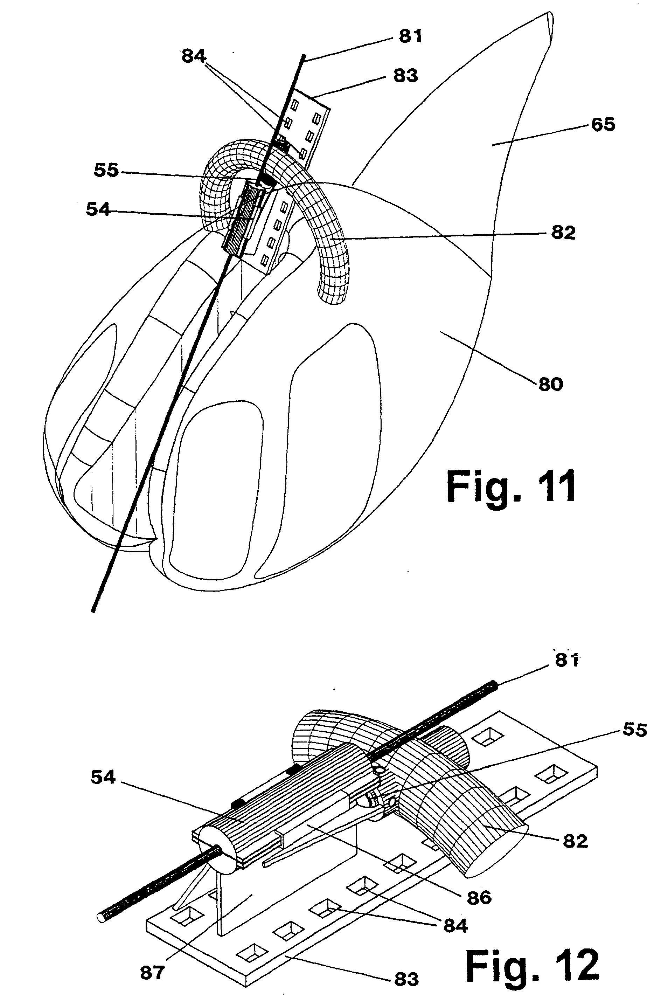

Weiter ist im Erfindungsgedanken eine dritte Ausführungsform enthalten, die nicht mit zwei einzelnen Kabinen 10, 11 arbeitet, sondern mit einer Vielzahl von Kabinen 80. Diese Vielzahl ist beschränkt durch die Tragkraft eines einzigen endlosen und umlaufenden Transportseils 81 und den Auftrieb des Fesselballons 1. Das Transportseil 81 stellt also technisch die zusammengefügten Transportseile 3, 4 dar, ohne dass damit der Herstellungsprozess des Transportseils 81 beschrieben ist. Fig. 11 stellt eine der Kabinen 80, Fig. 12 ein De-tail der Befestigung der Kabine 80 am Transportseil 81 dar.

Die Kabine 80 gemäss Fig. 11 weist - aerodynamisch modifiziert - einen im Wesentlichen hufeisenförmigen Grundriss auf. Das Transportseil 81 verläuft zwischen den beiden Schenkeln der Kabine 80 und völlig ausserhalb dieser. Modifiziert sind auch die Muffe 54 und die kardanische Aufhängung 55, wie in Fig. 12 gezeigt. Die kardanische Aufhängung 55 trägt an einem Träger 82 die Kabine 80. An der Muffe 54 ist eine Platte 83 befestigt, welche in regelmässigen Abständen Löcher 84 aufweist, welche geeignet sind Haken aufzunehmen, welche in der Gondel 2 das Gewicht der Kabine 80 übernehmen können.

Die modifizierte Aufhängung der Kabine 80 besteht aus der Muffe 54, die hier längs geteilt und mit einer Verriegelung 86 versehen ist. Auf der dem Betrachter abgewandten Seite weist die Muffe 54 beispielsweise Scharniergelenke auf, so dass nach dem Oeffnen der Verriegelung 86 der obere Teil der Muffe 54 weggeklappt werden kann. Die Muffe 54 ist auf eine Tragkonstruktion 87 montiert, welche unten die Platte 83 trägt und vorne, in Seilrichtung, die kardanische Aufhängung 55, an welcher der Träger 82 der Kabine 80 befestigt ist.

Fährt nun die Kabine 80 am Transportseil 81 nach oben und erreicht die Gondel 2, so greift eine mit den genannten Haken ausgerüstete Kette in die Löcher 84 der Platte 83 ein; diese Kette läuft zunächst mit der gleichen Geschwindigkeit wie das Transportseil 81. Sobald der Eingriff der Haken gesichert ist, wird von aussen die Verriegelung 86 gelöst und die Muffe 54 geöffnet, womit die Kabine 80 vom Transportseil 81 frei ist.

Wie in der Seilbahntechnik bekannt, wird nun die Kette verlangsamt, die Kabine 80 an eine langsam und horizontal in der Gondel 2 umlaufende weitere Kette übergeben. Diese führt die Gondel 80 langsam zur entsprechend ausgerüsteten Uebergabestation an das schneller ablaufende Transportseil 81. Ein Ausstieg der Passagiere kann in dieser Ausführungsform ebenfalls vorgesehen werden. In der Gondel 2 können gleichzeitig mehrere Kabinen 80 anwesend sein.

Die Ausführung der Uebergabe der Kabine 80 vom Transportseil 81 an in der Gondel vorhandenes, auf einer Kette oder einem Riemen beruhenden Transportsystem mit Haken und mit Löchern 84 versehener Platte 83 ist nicht an sich erfindungswesentlich. Dem Seilbahningenieur sind auch andere Lösungen zugänglich. Erfinderisch ist das Oeffnen der Muffen 54 um das Transportseil 81 freizugeben.

In der Bodenstation 7 verläuft die Uebergabe der Kabinen 80 an ein ortsfestes Transportsystem völlig analog zu jenem in der Gondel 2. Die unbenutzte Länge des Transportseils 81 läuft in der Bodenstation in einen Seilspeicher, so dass die Aufstiegshöhe von der technischen Seite her durch die Länge des Transportseils nur nach oben begrenzt ist, wie das auch in allen anderen geschilderten Ausführungsformen der Fall ist.

Das Transportseil 81 läuft analog zu den Transportseilen 3, 4 gemäss Fig. 10 in der Gondel 2 um eine Umlenkrolle. Der Antrieb des Transportseils 81 kann entweder in der Gondel 2 oder in der Bodenstation 7 vorgenommen werden.

## Patentansprüche

1. Seilbahn für den Transport von Personen und Waren zwischen einer Bodenstation (7) und einer von mindestens einem aerostatischen Auftriebskörper getragenen Gondel (2), dadurch gekennzeichnet, dass
- der mindestens eine aerostatische Auftriebskörper (1), durch ein Fesselseil (5) an die Bodenstation (7) gefesselt ist, und das Fesselseil in der Bodenstation auf eine Seiltrommel (19) auf- und abrollbar ist und eine Seele aufweist, welche Leitungen für Energietransport und Informationsaustausch zwischen Bodenstation (7) und Gondel (2) enthält, umhüllt von einem Mantel aus hochfesten Kunststoff-Fasern und Leitern für den Blitzschutz,
- mindestens zwei weitere, in der Regel gegenläufig bewegte Transportseile (3, 4) zwischen Bodenstation (7) und Gondel (2) verlaufen, an denen je mindestens eine Kabine (10, 11, 80) befestigt ist,
- an dem mindestens einen aerostatischen Auftriebskörper (1) ein im wesentlichen horizontaler Rahmen (36) an Trossen (37) aufgehängt ist, welcher eine Achse (32) trägt, welche senkrecht zu ihrer Erstreckung verschiebbar angeordnet ist und welche ihrerseits an Aufhängeelementen (31) die Gondel (2) trägt,
- die mindestens zwei Transportseile (3, 4) in der Gondel(2) von einer Antriebsvorrichtung aufgenommen werden, die, zusammen mit der Befestigung des Fesselseils (5) so an der Achse (32) befestigt sind, dass die von ihnen ausgeübten Zugkräfte momentenfrei von der Achse (32) aufgenommen werden können,
- Verschiebeelemente (35) vorhanden sind, mit welchen die Achse (32) parallel zu sich selbst verschoben werden kann, so dass die Wirkungslinie (41) der durch die mindestens drei genannten Seile (3, 4, 5) ausgeübten Zugkräfte jeweils durch den Auftriebsschwerpunkt des mindestens einen aerostatischen Auftriebskörpers (1) hindurchläuft,
- die Gondel (2) einen Rechner aufweist, zur Kontrolle und Steuerung aller technischen Vorgänge,
- die Bodenstation (7) um eine erste vertikale Achse (8) in Bezug auf die Umgebung drehbar ist, technische Einrichtungen aufweist zum Auf- und Abrollen von Seiltrommeln, zur Drehung der Bodenstation (7) in die Richtung, in welcher der mindestens eine aerostatische Auftriebskörper (1) von der Bodenstation (7) abliegt, also im wesentlichen der Leerichtung, ferner einen Rechner für die Kontrolle und Steuerung aller technischen Vorgänge, der mit dem Rechner in der Gondel (2) im Datenaustausch steht, und die Bodenstation (7) ferner Mittel aufweist zum Verankern eines aerostatischen Auftriebskörpers (1) und Mittel, um den verankerten aerostatischen Auftriebskörper (1) jeweils in den Wind zu drehen,
- sowohl die Gondel (2) als auch die Kabinen (10, 11, 80) Rettungsmittel aufweisen, die bei Auftriebsverlust des mindestens einen aerostatischen Auftriebskörpers (1) und Riss mindestens eines der vorhandenen Seile (3, 4, 5) eine sichere Rückkehr zur Erdoberfläche gestatten.

2. Seilbahn nach Patentanspruch 1, dadurch gekennzeichnet, dass ein einziger aerostatischer Auftriebskörper (1) vorhanden ist.

3. Seilbahn nach Patentanspruch 1 oder 2, dadurch gekennzeichnet, dass
- je ein Transportseil (3, 4) vorhanden ist, an welchen je eine Kabine (10 bzw. 11) befestigt ist,
- die beiden Kabinen (10, 11) in der Regel im Pendelbetrieb auf- und abfahren,
- jedes Transportseil in der Bodenstation (7) auf je eine Seiltrommel (17, 18) auf- bzw. von ihr abgerollt wird,
- jedes Transportseil (3, 4) in der Gondel (2) auf eine eigene Seiltrommel auf- bzw. davon abgerollt wird, und diese Seiltrommeln durch geeignete Mittel so gekoppelt sind, dass das auflaufende Transportseil (3 oder 4) die gleiche Geschwindigkeit aufweist, wie das ablaufende Transportseil (4 oder 3),
- der Antrieb der Transportseile (3, 4) über Fahrmotoren in der Gondel (2) erfolgt,
- die Seiltrommeln (17, 18) in der Bodenstation (7) ebenfalls über Antriebsmotoren verfügen, die jedoch nur zur rechnergesteuerten Kompensation der Längen der Transportseile dienen,
- die Seilgeschwindigkeiten sowohl in der Gondel (2) als auch in der Bodenstation (7) durch geeignete Mittel überwacht und gemessen werden.

4. Seilbahn nach Patentanspruch 1, 2 oder 3, dadurch gekennzeichnet, dass die Bodenstation (7)
- auf einer im wesentlichen kreisförmigen Plattform aufgebaut ist, welche auf einer kreisförmigen Schiene (9) umläuft und in der ersten vertikalen Achse (8) gelagert ist,
- eine weitere Seiltrommel (19) aufweist für das Fesselseil (5), die mit einem Antriebsmotor ausgesrüstet ist, mit welchem der aerostatische Auftriebskörper (1) aufgelassen und gegen die Netto-Auftriebskräfte eingeholt werden kann,
- Warteräume (15, 16) für abfahrende und ankommende Passagiere und Kommandoräume (22) für die Rechneranlage für Steuerungen und Antriebe und das technische Personal aufweist,
- einen Turm (20) trägt, welcher so angeordnet ist, dass er im wesentlichen im Luv der Bodenstation (7) steht, während alle Seile (3, 4, 5) nach Lee ablaufen, der Turm (20) eine Aufnahmeeinrichtung (21) trägt zur Aufnahme der Nase des aerostatischen Auftriebskörpers (1),
- auf der kreisförmigen Plattform eine kreissegmentförmige weitere Schiene (26) trägt, deren Drehzentrum eine weitere vertikale Achse (25) aufweist, die durch den Turm (20) geht, auf welcher weiteren Schiene (26) die technischen Einrichtungen der Bodenstation (7), wie Seiltrommeln (17, 18, 19), Warte- und Kommandoräume (14, 15, 22) um die weitere Achse (26) schwenkbar sind, dergestalt, dass der an der Aufnahmeeinrichtung (21) des Turmes (20) und mindestens am Fesselseil (5) verankerte aerostatische Auftriebskörper (1) mitsamt den schwenkbaren Teilen der Bodenstation (7) von allfälligen Seitenwinden ausgeschwenkt werden kann.

5. Seilbahn nach Patentanspruch 4, dadurch gekennzeichnet, dass im Bereich der kreissegmentförmigen weiteren Schiene (26) Sensoren vorhanden sind, die das Ausmass des Ausschwenkens der schwenkbaren Teile der Bodenstation (7) feststellen und an den Rechner weitergeben, und der Rechner Motoren ansteuert, die die gesamte Bodenstation (7)auf der ersten Schiene (9) um die erste Achse (8) um so viel drehen, dass der aerostatische Auftriebskörper (1) mitsamt den schwenkbaren Teilen der Bodenstation(7) wieder im Wind steht.

6. Seilbahn nach Patentanspruch 1, 2 oder 3, dadurch gekennzeichnet, dass
- die Bodenstation (7) auf einem Schwimmkörper angeordnet ist, im Wasser schwimmt und an einer Ankertrosse auf dem Grunde eines Gewässers verankert ist,
- eine weitere Seiltrommel (19) aufweist für das Fesselseil (5), die mit einem Antriebsmotor ausgesrüstet ist, mit welchem der aerostatische Auftriebskörper (1) aufgelassen und auch gegen die Netto-Auftriebskräfte eingeholt werden kann,
- Warteräume (14, 15) für abfahrende und ankommende Passagiere und Kommandoräume (22) für die Rechneranlage für Steuerungen und Antriebe und das technische Personal aufweist,
- einen Turm (20) trägt, welcher so angeordnet ist, dass er im wesentlichen im Luv der Bodenstation (7) steht, während alle Seile (3, 4, 5) nach Lee ablaufen, der Turm (20) eine Aufnahmeeinrichtung (21) trägt zur Aufnahme der Nase des aerostatischen Auftriebskörpers (1),

7. Seilbahn nach Patentanspruch 4, dadurch gekennzeichnet, dass
- je ein Transportseil (3, 4) mit je einer Kabine (10 oder 11) vorhanden ist,
- in der Bodenstation (7) für jedes Transportseil (3, 4) zwei Seiltrommeln (17, 18) vorhanden sind, wobei beide Enden jedes Transportseils (3, 4) in der Bodenstation (7) auf je eine Seiltrommel (17, 18) auf- bzw. von ihr abgerollt werden und in der Gondel (2) um je eine Rolle (70, 71) umlaufen,
- die zwei genannten Rollen in der Gondel (2) durch geeignete Mittel so gekoppelt werden können, dass die beiden Kabinen (10, 11) gegenläufig mit der gleichen Geschwindigkeit verkehren.

8. Seilbahn nach Patentanspruch 7, dadurch gekennzeichnet, dass
- die Fahrmotoren für die Transportseile (3, 4) in der Gondel (2) vorhanden sind, und die Antriebsmotoren für die je zwei Seiltrommeln (17, 18) in der Bodenstation (7) lediglich die richtigen Ein- und Auslaufgeschwindigkeiten der Transportseile (3, 4) steuern.

9. Seilbahn nach Patentanspruch 7, dadurch gekennzeichnet, dass die Fahrmotoren für die Transportseile (3, 4) in der Bodenstation (7) vorhanden sind und mit den Antriebsmotoren der je zwei Seiltrommeln (17, 18) zusammenfallen.

10. Seilbahn nach Patentanspruch 4, dadurch gekennzeichnet, dass
- die Transportseile (3, 4) zu einem einzigen umlaufenden und endlosen Seil (81) zusammengefügt sind, welches in der Gondel (2) über eine Umlenkrolle läuft, in der Bodenstation (7) zu Antriebszwecken über die zwei Seiltrommeln (17, 18) geführt wird, und die allenfalls unbenutzte Länge des aus den Transportseilen (3, 4) zusammengefügten endlosen Seiles (81) durch einen Seilspeicher durchläuft,
- dieses genannte endlose Seil (81) eine Zahl von mehr als zwei Kabinen (80) trägt.

11. Seilbahn nach Patentanspruch 10, dadurch gekennzeichnet, dass die Kabinen (80) am endlosen Seil (81) Mittel aufweisen, um sie sowohl in der Gondel (2) als auch in der Bodenstation (7) von diesem genannten Seil (81) zu trennen und sie anschliessend wieder mit dem Seil (81) zu verbinden.

12. Seilbahn nach Patentanspruch 10, dadurch gekennzeichnet, dass die Fahrmotoren für das aus den Transportseilen (3, 4) zusammengefügte endlose umlaufende Seil (81) in der Gondel (2) vorhanden sind, und die Antriebsmotoren für die je zwei Seiltrommeln (17, 18) in der Bodenstation (7) lediglich die richtigen Ein- und Auslaufgeschwindigkeiten der Transportseile (3, 4) steuern.

13. Seilbahn nach Patentanspruch 10, dadurch gekennzeichnet, dass die Fahrmotoren für das aus den Transportseilen (3, 4) zusammengefügte endlose umlaufende Seil (81) in der Bodenstation (7) vorhanden sind und mit den Antriebsmotoren der je zwei Seiltrommeln (17, 18) zusammenfallen.

14. Seilbahn nach einem der Patentansprüche 1 bis 9, dadurch gekennzeichnet, dass die Kabinen (10, 11)
- im Inneren einen von oben nach unten sich erweiternden trichterförmigen Schacht (59) mit einer Wandung (57) aufweisen, welche durch die gesamte Höhe der Kabinen (10, 11) hindurch läuft und dessen Oeffnungswinkel durch die im Regelbetrieb auftretenden Seilneigungen gegeben ist,
- von einer kardanischen Aufhängung (55) getragen werden, welche ihrerseits an einer Muffe (54) befestigt ist, die am Transportseil (3 oder 4) festgeklemmt werden kann, wobei die kardanische Aufhängung (55) am oberen Ende des Schachts (59) sich befindet und das Transportseil (3, 4) durch den Schacht (59) hindurchläuft,
- durch mindestens einen Dämpfer (49) in ihrer möglichen endlosen Pendelbewegung bedämpft wird, und dieser mindestens eine Dämpfer (49) zwischen Muffe (54) und der Wandung (57) des Schachtes (59) wirkt,
- als obere Abdeckung eine Haube (50) und als untere Abdeckung eine Bodenhaube (51) aufweist.

15. Seilbahn nach Patentanspruch 7, dadurch gekennzeichnet, dass
- die Kabinen (80) aerodynamische Form mit einem etwa hufeisenförmigen Grundriss aufweisen, welcher die Kabinen (80) an ihrem dem Wind zugewandten Ende in zwei Schenkel aufteilt,
- die Kabine einen Träger (82) aufweist, welcher die Kabine (80) trägt und seinerseits von einer kardanischen Aufhängung (55) getragen wird, die an einer Muffe (54) befestigt ist, die am endlosen Seil (81) festgeklemmt werden kann, wobei die Muffe (54) sowohl in der Bodenstation (7) als auch in der Gondel (2) geöffnet werden kann, um das Seil (81) freizugeben,
- die kardanische Aufhängung (55) am Träger (82) sich befindet und das Seil (81) zwischen den beiden Schenkeln der Kabine (80) hindurchläuft,
- die Mittel, um die Kabinen (80) vom Seil (81) zu trennen und sie wieder damit zu verbinden, aus der Muffe (54) bestehen, welche längs geteilt, aufklappbar und in geschlossenem Zustand mittels einer Verriegelung (86) gesichert werden kann,
- die Kabine durch mindestens einen Dämpfer (49) in ihrer möglichen Pendelbewegung bedämpft wird und dieser mindestens eine Dämpfer (49) zwischen der Muffe (54) und tragenden Teilen der Kabine (80) wirkt,
- die Kabine als obere Abdeckung eine Haube (50) und als untere Abdeckung eine Bodenhaube (51) aufweist.

16. Seilbahn nach Patentanspruch 14 und 15, dadurch gekennzeichnet, dass die aerodynamisch geformten Kabinen (10, 11, 80) an ihrem spitzeren, dem Wind abgewandten Ende eine vertikale Stabilisierungsflosse (65) aufweisen, welche um eine im wesentlichen horizontale Achse (66) schwenkbar ist, so dass die Stabilisierungsflosse (65) bei Auffahrt nach unten und bei Abfahrt nach oben geschwenkt werden kann, womit dem aus Horizontalwind und Fahrtwind kombinierten Windvektor Rechnung getragen werden kann.

17. Seilbahn nach Patentanspruch 7, dadurch gekennzeichnet, dass
- die Gondel (2) ein Klinometer (38) aufweist, welches die Horizontallage der Gondel (2) und gegebenenfalls das Ausmass der Abweichung davon misst und an den Rechner weitergibt,
- Hydraulikzylinder (39) vorhanden sind, welche zwischen dem Rahmen (36) und der Gondel (2) wirken und rechnergesteuert die Horizontallage der Gondel (2) bewirken können.

18. Seilbahn nach Patentanspruch 1 oder 2, der mindestens eine aerostatische Auftriebskörper (1), photovoltaische Zellen trägt.

19. Seilbahn nach Patentanspruch 18, dadurch gekennzeichnet, dass die Fläche der photovoltaischen Zellen so gross bemessen ist, das die Gondel (2) mitsamt allen elektrischen Verbrauchern mindestens tagsüber energieautark ist.

20. Seilbahn nach Patentanspruch 1 oder 2, dadurch gekennzeichnet, dass der mindestens eine aerostatische Auftriebskörper (1), eine Helikopterlandeplattform (46) trägt.

21. Seilbahn nach Patentanspruch 1 oder 2, dadurch gekennzeichnet, dass
- die Gondel (2) eine Vielzahl von behälterförmigen Elementen (42) trägt, welche Fallschirme und zugehörige Auslösevorrichtungen enthalten,
- dass ferner Kraftmesser an der horizontalen Achse (32) an welcher die Gondel (2) hängt, vorhanden sind, welche ihre Messresultate an den in der Gondel vorhandenen Rechner weiterleiten,
- dass bei weitgehendem Kraftverlust dieser genannten Kraftmesser der Rechner diese Tatsache als plötzlich und weitgehenden Auftriebsverlust interpretiert und daruf die genannten Fallschirme auslöst,
- die Gondel (2) unter ihrem Boden Dämpfungselemente trägt, welchen den Aufprall der an dem genannten Fallschirm niedergehenden Gondel (2) auf den Boden weiter dämpfen.

22. Seilbahn nach Patentanspruch 3 und 10, dadurch gekennzeichnet, dass
- die Kabinen (10, 11, 80) Behälter (53) aufweisen, welche Fallschirme und zugehörige Auslösevorrichtungen enthalten,
- dass ferner Kraftmesser in der Aufängevorrichtung vorhanden sind, welche bei weitgehendem Kraftverlust die genannten Fallschirme zur Auslösung bringen,
- die Kabinen (10, 11, 80), von der Bodenhaube (51) verdeckt, Dämpfungselemente trägt, welche den Aufprall der an den genannten Fallschirmen niedergehenden Kabinen (10, 11, 80) auf den Boden weiter dämpfen.

23. Seilbahn nach Patentanspruch 21 und 22, dadurch gekennzeichnet, dass die genannten Dämpfungselemente aus air-bag-ähnlichen Vorrichtungen bestehen.

24. Seilbahn nach Patentanspruch 21 und 22, dadurch gekennzeichnet, dass die genannten Dämpfungselemente aus wabenartigen Strukturen bestehen.

25. Seilbahn nach Patentanspruch 23 und 24, dadurch gekennzeichnet, dass die genannten Dämpfungselemente zusätzlich bestehen aus pneumatischen Dämpfungskörpern (68), welche an den Enden von ausklappbaren Beinen (67) befestigt sind, welche ihrerseits durch ein Seil (67) verbunden sind.

26. Seilbahn nach Patentanspruch 1 oder 2, dadurch gekennzeichnet, dass das Fesselseil (5) eine Vielzahl von Baken (13) trägt, welche mindesten nachts befeuert und mit Radar-Transpondern ausgerüstet sind.

## Claims

1. A cableway for transport of passengers and goods between a ground station (7) and a gondola (2) supported by at least one aerostatic buoyancy body, characterised in that
- the at least one aerostatic buoyancy body (1) is secured to the ground station (7) by a mooring cable (5) and the mooring cable in the ground station can be wound on and off a drum (19) and has a core which contains lines for conveying energy and exchanging information between the ground station (7) and the gondola (2) and is surrounded by a jacket of high-strength plastics material fibres and earth wires,
- at least two additional transport cables (3, 4) usually movable in opposite directions extend between the base station (7) and the gondola (2) and at least one cabin (10, 11, 80) is fastened to each cable,
- a substantially horizontal frame (36) is suspended on ropes (37) from the at least one aerostatic buoyancy body (1) and bears a shaft (32) which is disposed so as to be movable at right angles to the direction in which it extends and in turn supports the gondola (2) on suspension components (31),
- the at least two transport cables (3, 4) in the gondola (2) are received by a drive device which, together with the means fastening the mooring cable (5) are so fastened to the shaft (32) that the tensile forces exerted by them can be received without torque by the shaft (32),
- components (35) are provided for moving the shaft (32) parallel to its original position so that the line of action (41) of the tensile forces exerted by the at least three said cables (3, 4, 5) always extend through the centre of buoyancy of the at least one aerostatic buoyancy body (1),
- the gondola (2) comprises a computer for monitoring and controlling all mechanical processes,
- the ground station (7) is rotatable around a first vertical axis (8) relative to the environment, comprises mechanical means for winding on and winding off from cable drums, for rotating the ground station (7) in the direction in which the at least one aerostatic buoyancy body (1) is situated relative to the ground station (7), i.e. basically in the leeward direction, and also comprises a computer for monitoring and controlling all mechanical processes and connected for data transfer purposes to the computer in the gondola (2), and the ground station (7) also comprises means for anchoring an aerostatic buoyancy body (1) and means for continually rotating the anchored aerostatic buoyancy body (1) to windward, and
- both the gondola (2) and the cabins (10, 11, 80) comprise life-saving means which, in the event of a loss of buoyancy by the at least one aerostatic buoyancy body (1) and a breakage of at least one of the said cables (3, 4, 5) ensure a safe return to the ground.

2. A cableway according to claim 1, characterised in that a single aerostatic buoyancy body is provided.

3. A cableway according to claim 1 or claim 2, characterised in that
- a respective transport cable (3, 4) is provided and fastened to a respective cabin (10 or 11),
- the two cabins (10, 11) usually move up and down in shuttle operation,
- each transport cable in the ground station (7) can be wound on to or off a respective cable drum (17, 18),
- each transport cable (3, 4) in the gondola (2) is wound on to or off a separate cable drum, and the cable drums are coupled by suitable means so that the rising transport cable (3 or 4) has the same speed as the descending transport cable (4 or 3),
- the transport cables (3, 4) are driven by traction motors in the gondola (2),
- the cable drums (17, 18) in the ground station (7) also have drive motors but these are only for computer-controlled compensation of the lengths of the transport cables,
- the cable speeds both in the gondola (2) and in the ground station (7) are monitored and measured by suitable means.

4. A cableway according to claim 1, 2 or 3, characterised in that the ground station (7)
- is mounted on a substantially circular platform which rotates on a circular rail (9) and is supported along the first vertical axis (8),
- the station comprises another cable drum (19) for the mooring cable (5), equipped with a drive motor for releasing the aerostatic buoyancy body (1) and drawing it in against the net buoyancy forces,
- waiting rooms (15, 16) for departing and arriving passengers and control rooms (22) for the computer system for controls and drives and the engineering staff,
- the base station carries a tower (20) so disposed that it is substantially to windward of the base station (7), whereas all cables (3, 4, 5) extend to leeward, and the tower (20) bears a device (21) for receiving the nose of the aerostatic buoyancy body (1), and
- on the circular platform the ground station bears an additional rail (26) in the form of a circular sector, the centre of rotation of the additional rail having an additional vertical axis (25) which extends through the tower (20), the mechanical equipment of the ground station (7), such as cable drums (17, 18, 19), waiting and control rooms (14, 15, 22) being disposed on the additional rail (26) so as to be pivotable around the additional axis (26), so that the aerostatic buoyancy body (1) anchored to the receiving device (21) on the tower (20) and at least to the mooring cable (5), together with the pivotable parts of the ground station (7), can be swung away from any side winds.

5. A cableway according to claim 4, characterised in that sensors are disposed in the neighbourhood of the circular-sector additional rail (26) and measure the extent to which the pivotable parts of the ground station (7) have swung out and communicate the result to the computer, and the computer actuates motors which rotate the first ground station (7) on the first rail (9) around the first axis (8) sufficiently for the aerostatic buoyancy body (1) and the pivotable parts of the base station (7) to be again to windward.

6. A cableway according to claim 1, 2 or 3, characterised in that
- the ground station (7) is disposed on a floating member, floats in water and is anchored by a rope to the bottom of the water,
- it comprises an additional drum (19) for the mooring cable (5), equipped with a drive motor for releasing the aerostatic buoyancy body (1) or drawing it in against the net buoyancy forces,
- it comprises waiting rooms (14, 15) for departing and arriving passengers and control rooms (22) for the computer system for controls and drives and the engineering staff,
- it supports a tower (20) so disposed as to be substantially to windward of the ground station (7) whereas all cables (3, 4, 5) are to leeward, and the tower (20) bears a device (21) for receiving the nose of the aerostatic buoyancy body (1).

7. A cableway according to claim 4, characterised in that
- each transport cable (3, 4) is with a respective cabin (10 or 11),
- in the ground station (7) there are two cable drums (17, 18) for each transport cable (3, 4), and both ends of each transport cable (3, 4) in the ground station (7) can be wound on to or unwound from a cable drum (17, 18) and extend around a respective pulley (70, 71) in the gondola (2), and
- the said two pulleys in the gondola are coupled by suitable means so that the two cabins (10, 11) move in opposite directions at the same speed.

8. A cableway according to claim 7, characterised in that
- the traction motors for the transport cables (3, 4) are provided in the gondola (2) and the drive motors for the respective two cable drums (17, 18) in the base station (7) only control the speeds of the transport cables (3, 4) at the correct value when incoming and outgoing.

9. A cableway according to claim 7, characterised in that the traction motors for the transport cables (3, 4) are in the ground station (7) and coincide with the drive motors for the respective two cable drums (17, 18).

10. A cableway according to claim 4, characterised in that
- the transport cables (3, 4) are combined to form a single rotating endless cable (81) which runs in the gondola (2) on a guide pulley, is guided over the two cable drums (17, 18) for drive purposes in the ground station (7), and any unused lengths of the endless cable (81) made up of the transport cables (3, 4) runs through a cable storage device, and
- the said endless cable (81) bears more than two cabins (80).

11. A cableway according to claim 10, characterised in that the cabins (80) on the endless cable (81) comprise means for separating them from the said cable (81) both in the gondola (2) and in the ground station (7) and for subsequently re-connecting them to the cable (81).

12. A cableway according to claim 10, characterised in that the traction motors for the endless rotating cable (81) made up of the transport cables (3, 4) are provided in the gondola (2), and the drive motors for the two respective cable drums (17, 18) in the ground station (7) only set the speeds of the transport cables (3, 4) at the correct incoming and outgoing value.

13. A cableway according to claim 10, characterised in that the traction motors for the endless rotating cable (81) made up of the transport cables (3, 4) are provided in the ground station and coincide with the drive motors for the two respective cable drums (17, 18).

14. A cableway according to any of claims 1 to 9, characterised in that the cabins (10, 11)
- internally comprise a downwardly widening funnel-shaped shaft (59) having a wall (57) which extends through the entire height of the cabins (10, 11) and its opening angle is determined by the inclination of the cables when in closed-loop operation,
- the cabins are supported by a universal suspension (55) which in turn is secured to a sleeve (54) which can be clamped to the transport cable (3 or 4), and the universal suspension (55) is disposed at the top end of the shaft (59) and the transport cable (3, 4) extends through the shaft (59),
- the possible endless pendulum movement of the cabins is damped by at least one shock-absorber (49), and the at least one shock-absorber (49) acts between the sleeve (54) and the wall (57) of the shaft (59), and
- the cabins are covered at the top by a hood (50) and at the bottom by a floor cap (51).

15. A cableway according to claim 7, characterised in that
- the cabins (80) have an aerodynamic shape with an approximately horseshoe-shaped ground plan which divides the windward end of the cabins (50) into two portions,
- the cabin comprises a holder (82) which holds the cabin (80) and is in turn held by a universal suspension (55) which is secured to a sleeve (54) which can be clamped to the endless cable (81), and the sleeve (54) can be opened both in the ground station (7) and in the gondola (2) in order to release the cable (81),
- the universal suspension (55) is disposed on the holder (82) and the cable (81) extends between the two portions of the cabin (80),
- the means for separating the cabins (80) from the cable (81) and reconnecting them thereto comprise the sleeve (54) which is longitudinally divided, openable by folding and when in the closed state can be secured by a locking means (86),
- the possible pendulum motion of the cabins is damped by at least one shock-absorber (49) and the at least one shock-absorber (49) operates between the sleeve (54) and the supporting parts of the cabin (80), and
- the cabin is covered at the top by a hood (50) and at the bottom by a floor cap (51).

16. A cableway according to claims 14 and 15, characterised in that the pointed ends, facing away from the wind, of the aerodynamically shaped cabins (10, 11, 80) have a vertical stabilising fin (65) which is pivotable around a substantially horizontal axis (66) so that the fin (65) swings downward when rising and upward when descending, thus allowing for the combined wind vector made up of the horizontal wind and the relative wind.

17. A cableway according to claim 7, characterised in that
- the gondola (2) comprises a clinometer (38) which measures the horizontal position of the gondola (2), the extent of deviation therefrom if applicable, and transmits the results to the computer, and
- hydraulic cylinders (39) are provided and operate between the frame (36) and the gondola (2) and can position the gondola (2) horizontally under computer control.

18. A cableway according to claim 1 or claim 2, bearing at least one aerostatic buoyancy body (1) and photovoltaic cells.

19. A cableway according to claim 18, characterised in that the area of the photovoltaic cells is made sufficient for the gondola (2) and all electric loads to be self-sufficient in energy at least by day.

20. A cableway according to claim 1 or claim 2, characterised in that the at least one aerostatic buoyancy body (1) bears a helicopter landing platform (46).

21. A cableway according to claim 1 or claim 2, characterised in that
- the gondola (2) carries a number of container-like components (42) containing parachutes and associated release devices,
- dynamometers are provided on the horizontal shaft (32) on which the gondola (2) is suspended and communicate their measurements to the computer in the gondola,
- in the event of a substantial power loss the said dynamometer, for the benefit of the computer, interprets this fact as a sudden and substantial loss of buoyancy and thereupon releases the said parachutes, and
- the gondola (2) carries shock-absorbing elements under its floor so as additionally to absorb the impact of the gondola (2) on the ground when descending under the said parachute.

22. A cableway according to claims 3 and 10, characterised in that
- the cabins (10, 11, 80) comprise containers (53) which contain parachutes and associated release devices,
- dynamometers are provided in the suspension device and release the said parachutes in the event of a substantial power loss, and
- the cabins (10, 11, 80) carry shock-absorbing components which are covered by the floor cap (51) and additionally absorb the impact of the cabins (10, 11, 80) against the ground when descending under the said parachutes.

23. A cableway according to claims 21 and 22, characterised in that the said shock-absorbing components are devices similar to airbags.

24. A cableway according to claims 21 and 22, characterised in that the said shock-absorbing elements comprise honeycomb structures.

25. A cableway according to claims 23 and 24, characterised in that the said shock-absorbing components additionally comprise pneumatic shock-absorbing members (68) secured to the ends of foldable legs (67) which are connected by a cable (67).

26. A cableway according to claim 1 or 2, characterised in that the mooring cable (5) bears a number of beacons (13) which are illuminated at least at night and equipped with radar transponders.

## Revendications

1. Téléphérique pour le transport de personnes et de produits entre une station au sol (7) et une nacelle (2) portée par au moins un aérostat, caractérisé en ce que
- ledit aérostat (1) est attaché à la station au sol (7) à l'aide d'un câble d'attache (5) et le câble d'attache est apte à être enroulé et déroulé sur un tambour à câble (19), dans la station au sol, et présente une âme qui contient des lignes pour le transport d'énergie et l'échange d'informations entre la station au sol (7) et la nacelle (2), entourées par une gaine en fibres de matière plastique très résistantes et par des conducteurs pour la protection contre la foudre,
- il est prévu entre la station au sol (7) et la nacelle (2) au moins deux autres câbles de transport (3, 4), généralement déplacés en sens inverse, auxquels est fixée au moins une cabine (10, 11, 80),
- il est prévu sur ledit aérostat (1), suspendu à des filins (37), un châssis (36) sensiblement horizontal qui porte un axe (32) mobile perpendiculairement à son extension et portant lui-même la nacelle (2) au niveau d'éléments de suspension (31),
- les deux câbles de transport (3, 4), ou plus, sont reçus dans la nacelle (2) par un dispositif d'entraînement qui est fixé à l'axe (32), avec la fixation du câble d'attache (5), de telle sorte que les forces de traction exercées par lesdits câbles puissent être reçues sans couple par cet axe (32),
- il est prévu des éléments de manoeuvre (35) à l'aide desquels l'axe (32) peut être déplacé parallèlement à lui-même, de sorte que la ligne d'action (41) des forces de traction exercées par les trois câbles (3, 4, 5), ou plus, traverse le centre de portance dudit aérostat (1),
- la nacelle (2) comporte un ordinateur pour contrôler et commander toutes les opérations techniques,
- la station au sol (7) est apte à pivoter autour d'un premier axe vertical (8) par rapport à l'environnement, comporte des dispositifs techniques pour enrouler et dérouler des tambours à câble afin de faire pivoter la station au sol (7) dans le sens dans lequel ledit aérostat (1) est éloigné de ladite station (7), et donc sensiblement dans le sens sous le vent, comporte également un ordinateur pour contrôler et commander toutes les opérations techniques, qui est relié à l'ordinateur de la nacelle (2) suivant une relation d'échange de données, et comporte enfin des moyens pour ancrer un aérostat (1) et des moyens pour faire pivoter dans le vent l'aérostat (1) ancré,
- la nacelle (2) et les cabines (10, 11, 80) comportent des moyens de sauvetage qui permettent un retour sans danger jusqu'à la surface de la terre en cas de perte de portance dudit l'aérostat (1) et en cas de rupture de l'un au moins des câbles prévus (3, 4, 5).

2. Téléphérique selon la revendication 1, caractérisé en ce qu'il est prévu un seul aérostat (1).

3. Téléphérique selon la revendication 1 ou 2, caractérisé en ce que
- il est prévu des câbles de transport (3, 4) auxquels sont fixées des cabines respectives (10, 11),
- les deux cabines (10, 11) montent et descendent en règle générale suivant un mouvement de va-et-vient,
- chaque câble de transport est enroulé et déroulé dans la station au sol (7) sur un tambour à câble (17, 18),
- chaque câble de transport (3, 4) est enroulé et déroulé dans la nacelle (2) sur un tambour à câble propre, et les tambours à câble sont accouplés à l'aide de moyens appropriés de telle sorte que le câble de transport montant (3 ou 4) ait la même vitesse que le câble de transport descendant (4 ou 3),
- l'entraînement des câbles de transport (3, 4) se fait par l'intermédiaire de moteurs de traction dans la nacelle (2),
- les tambours à câble (17, 18) prévus dans la station au sol (7) disposent eux aussi de moteurs d'entraînement, qui ne servent toutefois qu'à la compensation commandée par ordinateur des longueurs des câbles de transport, et
- la vitesse des câbles est surveillée et mesurée à l'aide de moyens appropriés aussi bien dans la nacelle (2) que dans la station au sol (7).

4. Téléphérique selon la revendication 1, 2 ou 3, caractérisé en ce que la station au sol (7)
- est construite sur une plate-forme sensiblement circulaire qui tourne sur un rail circulaire (9) et qui est montée dans le premier axe vertical (8),
- comporte un autre tambour à câble (19) pour le câble d'attache (5), lequel tambour (19) est équipé d'un moteur d'entraînement grâce auquel l'aérostat (1) peut être lâché puis ramené à l'encontre des forces de portance nettes,
- comporte des espaces d'attente (15, 16) pour les passagers qui partent et qui arrivent, et des espaces de commande (22) pour l'installation informatique prévue pour les commandes et les entraînements et pour le personnel technique,
- porte une tour (20) qui est disposée de manière à se trouver sensiblement dans le vent de la station au sol (7), tandis que tous les câbles (3, 4, 5) se déroulent sous le vent, la tour (20) portant un dispositif de réception (21) pour recevoir le nez de l'aérostat (1),
- porte, sur la plate-forme circulaire, un second rail en forme de segment de cercle (26) dont le centre de rotation présente un second axe vertical (25) traversant la tour (20), et sur lequel les dispositifs techniques de la station au sol (7) tels que les tambours à câble (17, 18, 19) et les espaces d'attente et de commande (15, 16, 22) sont montés pour pouvoir pivoter autour dudit second axe (25), de telle sorte que l'aérostat (1) ancré au dispositif de réception (21) de la tour (20) et au moins au câble d'attache (5), avec tous les éléments pivotants de la station au sol (7), puisse pivoter sous l'action d'éventuels vents latéraux.

5. Téléphérique selon la revendication 4, caractérisé en ce qu'il est prévu, dans la zone du second rail en forme de segment de cercle (26), des capteurs qui déterminent le degré de pivotement des éléments pivotants de la station au sol (7) et le transmettent à l'ordinateur, lequel ordinateur commande des moteurs qui font tourner toute la station au sol (7) autour du premier axe (8), sur le premier rail (9), jusqu'à ce que l'aérostat (1), avec lesdits éléments pivotants de la station au sol (7), se trouve à nouveau dans le vent.

6. Téléphérique selon la revendication 1, 2 ou 3, caractérisé en ce que la station au sol (7)
- est disposée sur un corps flottant, flotte sur l'eau et est ancrée au fond d'un cours d'eau au niveau d'un filin d'ancrage,
- comporte un autre tambour à câble (19) pour le câble d'attache (5), lequel tambour à câble (19) est équipé d'un moteur d'entraînement grâce auquel l'aérostat (1) peut être lâché puis ramené à l'encontre des forces de portance nettes,
- comporte des espaces d'attente (15, 16) pour les passagers qui partent et qui arrivent, et des espaces de commande (22) pour l'installation informatique prévue pour les commandes et les entraînements et pour le personnel technique,
- porte une tour (20) qui est disposée de manière à se trouver sensiblement dans le vent de la station au sol (7), tandis que tous les câbles (3, 4, 5) se déroulent sous le vent, la tour (20) portant un dispositif de réception (21) pour recevoir le nez de l'aérostat (1).

7. Téléphérique selon la revendication 4, caractérisé en ce que
- il est prévu des câbles de transport (3, 4) avec des cabines respectives (10 ou 11),
- dans la station au sol (7), il est prévu pour les câbles de transport (3, 4) deux tambours à câble (17, 18), les deux extrémités des câbles de transport (3, 4) étant enroulées et déroulées dans la station au sol (7) sur des tambours à câble respectifs (17, 18) et passant dans la nacelle (2) sur des poulies respectives (70, 71),
- les deux poulies prévues dans la nacelle (2) peuvent être accouplées à l'aide de moyens appropriés, pour que les deux cabines (10, 11) circulent en sens inverse et à la même vitesse.

8. Téléphérique selon la revendication 7, caractérisé en ce que
- les moteurs de traction prévus pour les câbles de transport (3, 4) sont disposés dans la nacelle (2) et les moteurs d'entraînement prévus respectivement pour les deux tambours à câble (17, 18) dans la station au sol (7) commandent simplement les vitesses d'entrée et de sortie correctes des câbles de transport (3, 4).

9. Téléphérique selon la revendication 7, caractérisé en ce que les moteurs de traction pour les câbles de transport (3, 4) sont disposés dans la station au sol (7) et coïncident avec les moteurs d'entraînement des deux tambours à câble respectifs (17, 18).

10. Téléphérique selon la revendication 4, caractérisé en ce que
- les câbles de transport (3, 4) sont assemblés en un seul câble sans fin (81) qui passe dans la nacelle (2) sur une poulie de renvoi et qui est guidé dans la station au sol (7) par l'intermédiaire des deux tambours à câble (17, 18), à des fins d'entraînement, la longueur éventuellement inutilisée du câble sans fin (81) assemblé à partir des câbles de transport (3, 4) traversant une réserve de câble, et
- ce câble sans fin (81) porte plus de deux cabines (80).

11. Téléphérique selon la revendication 10, caractérisé en ce que les cabines (80) présentent des moyens, sur le câble sans fin (81), pour les séparer dudit câble (81) aussi bien dans la nacelle (2) que dans la station au sol (7), puis pour les relier à nouveau au câble (81).

12. Téléphérique selon la revendication 10, caractérisé en ce que les moteurs de traction prévus pour le câble sans fin (81) assemblé à partir des câbles de transport (3, 4) se trouvent dans la nacelle (2), et les moteurs d'entraînement prévus respectivement pour les deux tambours à câble (17, 18) dans la station au sol (7) commandent simplement les vitesses d'entrée et de sortie correctes des câbles de transport (3, 4).

13. Téléphérique selon la revendication 10, caractérisé en ce que les moteurs de traction prévus pour le câble sans fin (81) assemblé à partir des câbles de transport (3, 4) se trouvent dans la station au sol (7) et coïncident avec les moteurs d'entraînement des deux tambours à câble respectifs (17, 18).

14. Téléphérique selon l'une des revendications 1 à 9, caractérisé en ce que les cabines (10, 11)
- renferment une cavité en forme d'entonnoir(59) qui va en s'élargissant de haut en bas, qui présente une paroi (57) s'étendant sur toute la hauteur des cabines (10, 11), et dont l'angle d'ouverture est défini par les inclinaisons de câbles qui apparaissent lors d'un fonctionnement normal,
- sont portées par une suspension à la cardan (55) elle-même fixée à un manchon (54) qui peut être bloqué sur le câble de transport (3 ou 4), la suspension à la cardan (55) se trouvant à l'extrémité supérieure de la cavité (59) et le câble de transport (3, 4) traversant celle-ci,
- sont amorties dans leur éventuel mouvement pendulaire sans fin par au moins un amortisseur (49), qui agit entre le manchon (54) et la paroi (57) de la cavité (59), et
- présentent comme recouvrement supérieur un capot (50), et comme recouvrement inférieur un capot inférieur (51).

15. Téléphérique selon la revendication 7, caractérisé en ce que
- les cabines (80) ont une forme aérodynamique en fer à cheval, vues en plan, qui les divise à leur extrémité tournée vers le vent en deux branches,
- la cabine (80) comporte un support (82) qui la porte et qui est lui-même porté par une suspension à la cardan (55) fixée à un manchon (54) qui peut être bloqué sur le câble sans fin (81), ledit manchon (54) pouvant être ouvert aussi bien dans la station au sol (7) que dans la nacelle (2) afin de libérer le câble (81),
- la suspension à la cardan (55) se trouve sur le support (82) et le câble (81) passe entre les deux branches de la cabine (80),
- les moyens pour séparer les cabines (80) du câble (81) et pour les réunir se composent du manchon (54) qui est divisé longitudinalement, qui est apte à être ouvert et qui, en position fermée, peut être bloqué à l'aide d'un verrouillage (86),
- la cabine est amortie dans son éventuel mouvement pendulaire par au moins un amortisseur (49), qui agit entre le manchon (54) et des éléments porteurs de la cabine (80),
- la cabine comporte comme recouvrement supérieur un capot (50) et comme recouvrement inférieur un capot inférieur (51).

16. Téléphérique selon les revendications 14 et 15, caractérisé en ce que les cabines (10, 11, 80) de forme aérodynamique présentent, à leur extrémité la plus pointue, opposée au vent, un stabilisateur vertical (65) qui est apte à pivoter autour d'un axe (66) sensiblement horizontal, de sorte que le stabilisateur (65) peut pivoter vers le bas lors de la montée, et vers le haut lors de la descente, ce qui permet de tenir compte du vecteur de vent combiné résultant du vent horizontal et du vent relatif.

17. Téléphérique selon la revendication 7, caractérisé en ce que
- la nacelle (2) comporte un clinomètre (38) qui mesure la position horizontale de la nacelle (2) et éventuellement le degré de l'écart par rapport à cette position, et les transmet à l'ordinateur,
- il est prévu des vérins hydrauliques (39) qui agissent entre le châssis (36) et la nacelle (2) et qui, commandés par ordinateur, peuvent provoquer la position horizontale de la nacelle (2).

18. Téléphérique selon la revendication 1 ou 2, dans lequel ledit aérostat (1) porte des cellules photovoltaïques.

19. Téléphérique selon la revendication 18, caractérisé en ce que la surface calculée pour les cellules photovoltaiques est suffisamment grande pour fournir une autonomie d'énergie au moins pendant la journée à la nacelle (2) avec tous les consommateurs d'électricité.

20. Téléphérique selon la revendication 1 ou 2, caractérisé en ce que ledit aérostat (1) porte une hélisurface (46).

21. Téléphérique selon la revendication 1 ou 2, caractérisé en ce que
- la nacelle (2) porte plusieurs éléments en forme de logements (42) qui contiennent des parachutes et les dispositifs de déclenchement correspondants,
- il est également prévu, sur l'axe horizontal (32) auquel la nacelle (2) est suspendue, des dynamomètres qui transmettent leurs résultats de mesure à l'ordinateur prévu dans la nacelle,
- en cas de perte d'énergie importante de ces dynamomètres, l'ordinateur interprète cela comme une perte de portance soudaine et importante, et déclenche les parachutes,
- la nacelle (2) porte sous son plancher des éléments d'amortissement qui amortissent encore le choc de ladite nacelle (2) sur le sol lorsqu'elle descend avec les parachutes.

22. Téléphérique selon les revendications 3 et 10, caractérisé en ce que
- les cabines (10, 11, 80) comportent des logements (53) qui contiennent des parachutes et les dispositifs de déclenchement correspondants,
- il est également prévu, dans le dispositif de suspension, des dynamomètres qui provoquent le déclenchement des parachutes en cas de perte d'énergie importante,
- les cabines (10, 11, 80), couvertes par le capot inférieur (51), portent des éléments d'amortissement qui amortissent encore le choc sur le sol des cabines (10, 11, 80) qui descendent avec les parachutes.

23. Téléphérique selon les revendications 21 et 22, caractérisé en ce que les éléments d'amortissement se composent de dispositifs du type airbag.

24. Téléphérique selon les revendications 21 et 22, caractérisé en ce que les éléments d'amortissement se composent de structures alvéolaires.

25. Téléphérique selon les revendications 23 et 24, caractérisé en ce que les éléments d'amortissement se composent en supplément de corps d'amortissement pneumatiques (68) qui sont fixés aux extrémités de jambes aptes à être dépliées (67) elles-mêmes reliées par un câble (67).

26. Téléphérique selon la revendication 1 ou 2, caractérisé en ce que le câble d'attache (5) porte plusieurs balises (13) qui sont éclairées au moins la nuit et qui sont équipées de transpondeurs de radars.
